# EUROPEAN PATENT APPLICATION

(11) **EP 4 257 542 A1**
(43) Date of publication of application: **11.10.2023**
(21) Application number: 21919608.6
(22) Date of filing: 07.12.2021
(51) Int. Cl.: C01B 3/04, B01J 8/02

(54) **AMMONIA DECOMPOSITION APPARATUS**

(30) Priority: 14.01.2021 JP 2021004386
(71) Applicant: Mitsubishi Heavy Industries, Ltd., Tokyo 100-8332 (JP)
(72) Inventor: SAKAGUCHI, Masakazu, Yokohama-shi, Kanagawa 220-8401 (JP); TACHIBANA, Shinya, Yokohama-shi, Kanagawa 220-8401 (JP); FURUICHI, Hiroyuki, Yokohama-shi, Kanagawa 220-8401 (JP); YONEKAWA, Takahito, Yokohama-shi, Kanagawa 220-8401 (JP); ODA, Erika, Yokohama-shi, Kanagawa 220-8401 (JP); ISHII, Hiromi, Yokohama-shi, Kanagawa 220-8401 (JP)
(74) Representative: Studio Torta S.p.A.
(86) International application number: PCT/JP2021/044813
(87) International publication number: WO 2022/153719

(57) **Abstract**

An ammonia decomposition system includes: a reactor filled with a catalyst for a decomposition reaction where ammonia which is a raw material is decomposed into hydrogen and nitrogen; and a diluent gas supply line for supplying a diluent gas having a lower ammonia concentration than the raw material, such that the diluent gas is mixed with the raw material before the raw material flows into the catalyst.

## Description

### TECHNICAL FIELD

The present disclosure relates to an ammonia decomposition system.

This application claims the priority of Japanese Patent Application No. 2021-004386 filed on January 14, 2021, the content of which is incorporated herein by reference.

### BACKGROUND

Patent Document 1 describes an ammonia decomposition system for decomposing ammonia into hydrogen and nitrogen by externally heating a catalyst layer while allowing ammonia to pass through.

### Citation List

### Patent Literature

Patent Document 1: JP2019-167265A

### SUMMARY

### Technical Problem

However, under an environment with a high concentration of ammonia, such as when a raw material of 100% ammonia is used, ammonia and an iron-based material react and the iron-based material is nitrated at 500°C to 600°C which is a temperature where ammonia is decomposed, decreasing a mechanical strength. Then, for example, if a tube filled with a catalyst is made of the iron-based material, the mechanical strength of the tube is decreased, which may lead to breakage of the tube.

In view of the above, an object of at least one embodiment of the present disclosure is to provide an ammonia decomposition system capable of suppressing nitridation of a material for a reactor where ammonia is decomposed.

### Solution to Problem

In order to achieve the above object, an ammonia decomposition system according to the present disclosure, includes: a reactor filled with a catalyst for a decomposition reaction where ammonia which is a raw material is decomposed into hydrogen and nitrogen; and a diluent gas supply line for supplying a diluent gas having a lower ammonia concentration than the raw material, such that the diluent gas is mixed with the raw material before the raw material flows into the catalyst.

### Advantageous Effects

With an ammonia decomposition system of the present disclosure, since an ammonia concentration in a reactor is decreased by a diluent gas, it is possible to suppress nitridation of a material constituting the reactor where ammonia is decomposed.

### BRIEF DESCRIPTION OF DRAWINGS

FIG. 1 is a configuration diagram of an ammonia decomposition system according to Embodiment 1 of the present disclosure.
FIG. 2 is a configuration diagram of a reactor for the ammonia decomposition system according to Embodiment 1 of the present disclosure.
FIG. 3 is a configuration diagram showing another modified example of the reactor for the ammonia decomposition system according to Embodiment 1 of the present disclosure.
FIG. 4 is a partial cross-sectional view showing still another modified example of the reactor for the ammonia decomposition system according to Embodiment 1 of the present disclosure.
FIG. 5 is a partial cross-sectional view showing still another modified example of the reactor for the ammonia decomposition system according to Embodiment 1 of the present disclosure.
FIG. 6 is a partial cross-sectional view showing still another modified example of the reactor for the ammonia decomposition system according to Embodiment 1 of the present disclosure.

### DETAILED DESCRIPTION

Hereinafter, an ammonia decomposition system according to embodiments of the present disclosure will be described with reference to the drawings. The embodiments each indicate one aspect of the present disclosure, do not intend to limit the disclosure, and can optionally be modified within a scope of a technical idea of the present disclosure.

### <Configuration of ammonia decomposition system according to Embodiment 1 of present disclosure>

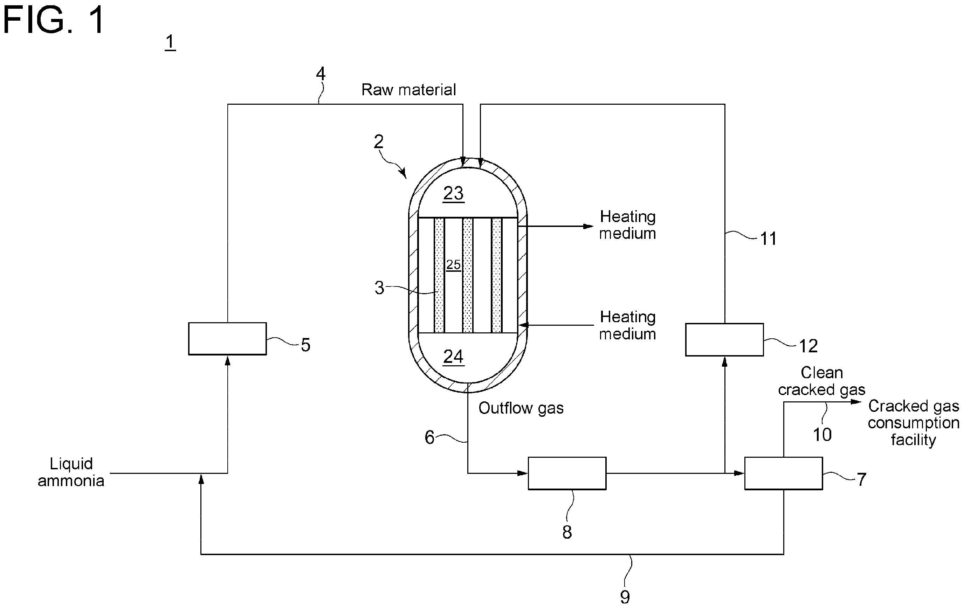

As shown in FIG. 1, an ammonia decomposition system 1 according to Embodiment 1 of the present disclosure is an apparatus for decomposing ammonia, which is a raw material, into hydrogen and nitrogen by a reaction represented by the following reaction formula (1). The ammonia decomposition system 1 includes a reactor 2 filled with a catalyst 3 for the ammonia decomposition reaction represented by the reaction formula (1).

2NH₃→N₂+3H₂ ... (1)

The reactor 2 is connected to a raw material supply line 4 for supplying the raw material to the reactor. The raw material supply line 4 is provided with an evaporator 5 for evaporating liquid ammonia supplied from a storage facility (not shown) for storing liquid ammonia into gaseous ammonia. Further, the reactor 2 is connected to one end of an outflow gas line 6 through which an outflow gas having flowed out from the reactor 2 flows. The outflow gas contains nitrogen, hydrogen, and unreacted ammonia according to the reaction formula (1).

Another end of the outflow gas line 6 is connected to an ammonia recovery device 7. The configuration of the ammonia recovery device 7 is not particularly limited, and may be, for example, a water scrubber, a pressure swing adsorption (PSA) device, or the like. The outflow gas line 6 is provided with a cooler 8 for cooling the outflow gas, upstream of the ammonia recovery device 7. The cooler 8 may be, for example, a heat exchanger for exchanging heat between the outflow gas and liquid ammonia before flowing into the evaporator 5. With this configuration, the outflow gas is cooled and the temperature of the liquid ammonia is raised, making it possible to reduce energy for raising the temperature of the liquid ammonia in the evaporator 5.

A recovered ammonia line 9 is provided in order to return the liquid ammonia recovered in the ammonia recovery device 7 to the raw material supply line 4 upstream of the evaporator 5. The ammonia recovery device 7 is connected to one end of a clean cracked gas line 10 for supplying a clean cracked gas produced by removing ammonia from the outflow gas in the ammonia recovery device 7 to a cracked gas consumption facility such as a gas turbine. An outflow gas recycle line 11, which is connected at one end to the outflow gas line 6 and is connected at another end to the reactor 2 is provided between the cooler 8 and the ammonia recovery device 7. The outflow gas recycle line 11 is provided with a compressor 12.

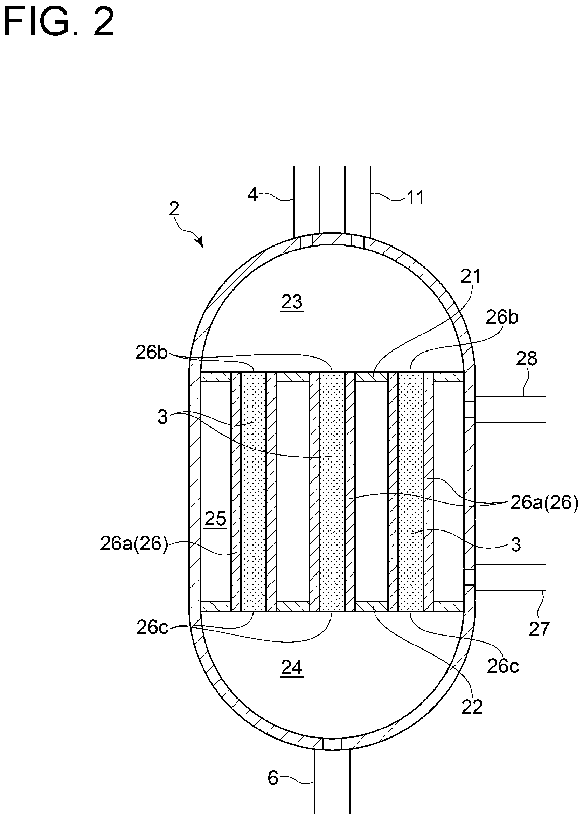

As shown in FIG. 2, the reactor 2 is internally divided by partition members 21, 22 into a first chamber 23, a second chamber 24 located downstream of the first chamber 23 in a direction in which the raw material flows in the reactor 2, and a third chamber 25 between the first chamber 23 and the second chamber 24. The raw material supply line 4 and the outflow gas recycle line 11 communicate with the first chamber 23, and the outflow gas line 6 communicates with the second chamber 24. In the third chamber 25, a plurality of catalyst containing parts 26 including tubular containing tubes 26a are disposed such that one end 26b side of each of the containing tubes 26a is fixed to the partition member 21 and another end 26c side is fixed to the partition member 22. The number of containing tubes 26a is optional, and may be one or at least two. Each of the containing tubes 26a communicates with the first chamber 23 on the one end 26b side and communicates with the second chamber 24 on the another end 26c side. Each of the containing tubes 26a contains the catalyst 3. The reactor 2 is provided with a heating medium supply port 27 for supplying a heating medium such as steam into the third chamber 25 and a heating medium outflow port 28 for the heating medium to flow out from the third chamber 25.

### <Operation of ammonia decomposition system according to Embodiment 1 of present disclosure>

Next, an operation of the ammonia decomposition system 1 according to Embodiment 1 of present disclosure will be described with reference to FIGs. 1 and 2. The liquid ammonia flowing through the raw material supply line 4 is evaporated in the evaporator 5 to be ammonia gas, and flows into the first chamber 23 of the reactor 2. As will be described later, part of the outflow gas containing hydrogen, nitrogen, and ammonia also flows into the first chamber 23 via the outflow gas recycle line 11. The ammonia gas and the outflow gas are mixed in the first chamber 23 to be a mixed gas, and the mixed gas flows into each containing tube 26a.

The heating medium is supplied to the third chamber 25 via the heating medium supply port 27, and the heating medium flows out from the third chamber 25 via the heating medium outflow port 28. Since the catalyst 3 is contained in each catalyst containing part 26, the catalyst 3 and the mixed gas are heated by the heating medium having supplied to the third chamber 25. At least part of ammonia in the mixed gas having flowed into each containing tube 26a is decomposed into hydrogen and nitrogen by the ammonia decomposition reaction represented by the reaction formula (1), which is caused by a catalytic action of the catalyst 3. The crude cracked gas having flowed out from each containing tube 26a to the second chamber 24 contains hydrogen, nitrogen, and unreacted ammonia.

The crude cracked gas having flowed out from each containing tube 26a to the second chamber 24 flows out from the second chamber 24 as the outflow gas and flows through the outflow gas line 6. Herein, a temperature or a supply amount of the heating medium is preferably adjusted such that a temperature of the outflow gas is 300°C to 700°C, preferably 400°C to 600°C. This is because the activity of the catalyst 3 may not be sufficient if the temperature of the outflow gas is lower than this temperature range, whereas excessive heating energy may be used and an operation cost of the ammonia decomposition system 1 may be high if the temperature of the outflow gas is higher than this temperature range.

After the outflow gas flowing through the outflow gas line 6 is cooled in the cooler 8, part of the outflow gas flows into the outflow gas recycle line 11 and the rest of the outflow gas flows into the ammonia recovery device 7. In the ammonia recovery device 7, ammonia is recovered from the outflow gas, the clean cracked gas containing hydrogen, nitrogen, traces of unrecovered ammonia, and a small amount of water if the ammonia recovery device 7 is a water scrubber is supplied to the cracked gas consumption facility via the clean cracked gas line 10, and the recovered ammonia is supplied to the raw material supply line 4 upstream of the evaporator 5 via the recovered ammonia line 9.

The outflow gas having flowed into the outflow gas recycle line 11 is pressurized by the compressor 12 and flows into the first chamber 23 of the reactor 2. As described above, the ammonia gas and the outflow gas are mixed in the first chamber 23, and if the ammonia gas is 100% ammonia, since the outflow gas contains hydrogen and nitrogen in addition to ammonia, the ammonia concentration of the latter is lower than the ammonia concentration of the former, resulting in the ammonia concentration in the mixed gas of the ammonia gas and the outflow gas being lower than the ammonia concentration of the ammonia gas supplied as the raw material. That is, the outflow gas flowing into the first chamber 23 via the outflow gas recycle line 11 functions as a diluent gas for diluting the ammonia gas in order to reduce a concentration of the ammonia gas flowing into the first chamber 23 to at most 80% from 100%, preferably to at most 50% from 100%.

In general, the higher the ammonia concentration and the higher the temperature, the more easily a nitridation reaction by ammonia occurs, and in the ammonia decomposition system 1 according to Embodiment 1 of the present disclosure, since the ammonia concentration in the reactor 2 is decreased by the outflow gas supplied via the outflow gas recycle line 11, it is possible to suppress nitridation of the material constituting the reactor 2.

### <Modified example of ammonia decomposition system according to Embodiment 1 of present disclosure>

In Embodiment 1, the outflow gas before flowing into the ammonia recovery device 7 is used as the diluent gas. However, the present disclosure is not limited to this form. The clean cracked gas having flowed out from the ammonia recovery device 7 may be used as the diluent gas. The clean cracked gas is also a gas obtained by recovering ammonia from the outflow gas, and thus can be said to be the outflow gas having flowed out from the reactor 2. Further, in Embodiment 1, the liquid ammonia with 100% concentration stored in a storage facility (not shown) is evaporated into gaseous ammonia in the evaporator 5. However, the present disclosure is not limited to supplying the liquid ammonia with 100% concentration to the evaporator 5, but a principal component mixed with a small amount of a mixture may supply a liquid containing ammonia to the evaporator 5.

In Embodiment 1, if the heating medium supplied to the third chamber 25 is steam, it is possible to use, for example, steam generated by heat of an exhaust gas of a gas turbine or steam extracted from a steam system of a gas turbine/steam turbine combined cycle, and the steam having flowed out from the third chamber 25 can also be returned to a supply source and recycled.

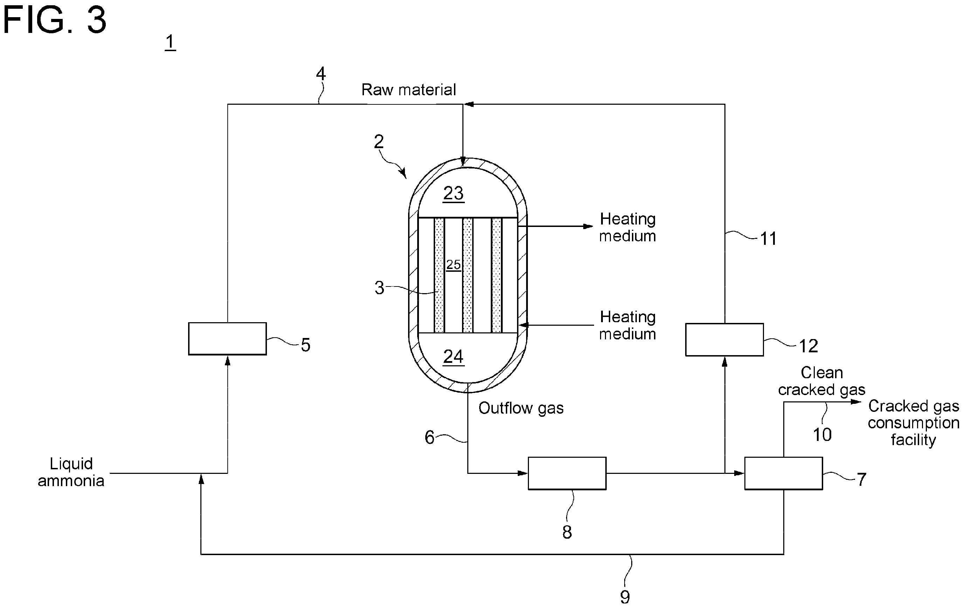

In Embodiment 1, the outflow gas recycle line 11 is connected to the reactor 2 so as to communicate with the first chamber 23. However, the present disclosure is not limited this form. As shown in FIG. 3, the outflow gas recycle line 11 may be connected to the raw material supply line 4. With such configuration, since the ammonia gas and the outflow gas are mixed before flowing into the reactor 2 and become the mixed gas and the ammonia concentration in the mixed gas can be decreased, it is possible to further suppress nitridation of a material constituting the reactor 2.

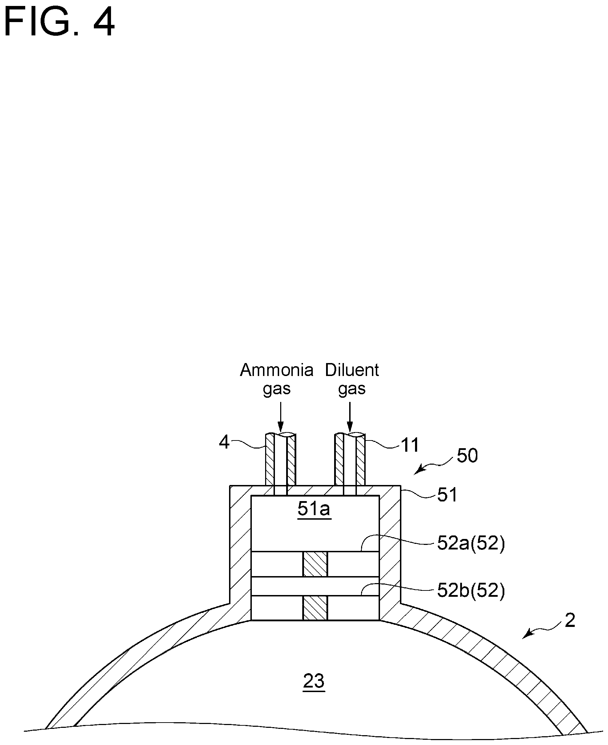

In Embodiment 1, a gas mixer 50 may be provided which is configured to mix the ammonia gas having flowed in via the raw material supply line 4 and the outflow gas having flowed in via the outflow gas recycle line 11. For example, as shown in FIG. 4, the gas mixer 50 can be configured to include a housing part 51 formed of a portion of an outer wall of the reactor 2, and a stator blade 52 disposed in an internal space 51a inside the housing part 51. The internal space 51a communicates with the first chamber 23, and respective downstream ends of the raw material supply line 4 and the outflow gas recycle line 11 are connected to the housing part 51. In the gas mixer 50 having this configuration, the stator blade 52 spirally flows the ammonia gas and the outflow gas having flowed into the internal space 51a via the raw material supply line 4 and the outflow gas recycle line 11, respectively, making it possible to mix both the gases and supply the mixed gas to the first chamber 23. Thus, it is possible to reliably decrease the ammonia concentration in the first chamber 23. The number of stator blades 52 is not limited to one, but as shown in FIG. 4, the stator blade 52 may include two stator blades 52a and 52b. Reversing a direction of the spiral flow of the gas given by each of the stator blades 52a and 52b can further enhance the mixing of the ammonia gas and the outflow gas. Furthermore, the number of stator blades 52 may be at least three.

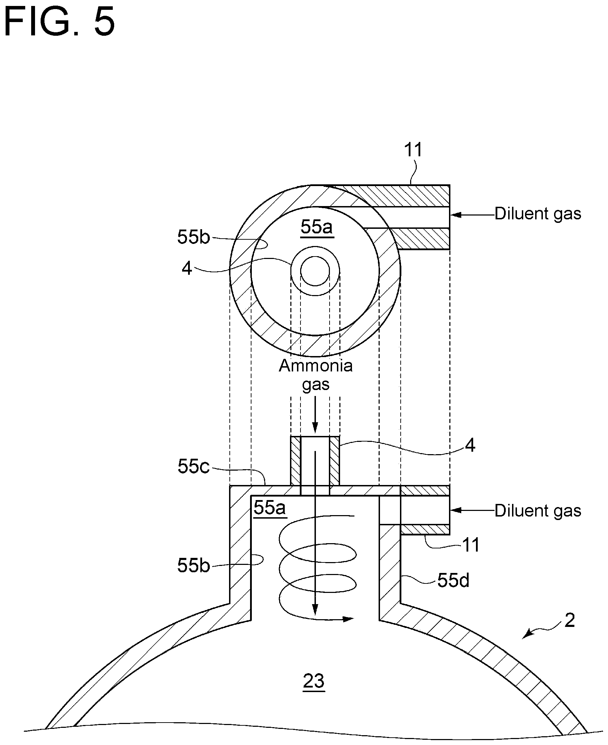

Further, for example, as shown in FIG. 5, the gas mixer 50 can include a housing part 55 formed of a portion of the outer wall of the reactor 2. Inside the housing part 55, an internal space 55a is defined by a cylindrical inner circumferential surface 55b. The downstream end of the raw material supply line 4 is connected to an end surface 55c of the housing part 55, and the downstream end of the outflow gas recycle line 11 is connected to a side surface 55d of the housing part 55 so as to face a tangent direction to the inner circumferential surface 55b. In the gas mixer 50 having this configuration, the outflow gas having flowed into the internal space 55a via the outflow gas recycle line 11 flows along the inner circumferential surface 55b, and thus forms a vortex in the internal space 55a. On the other hand, the ammonia gas having flowed into the internal space 55a via the raw material supply line 4 flows along a direction orthogonal to the vortex of the outflow gas, and thus the ammonia gas and the outflow gas are mixed in the internal space 55a. Whereby, it is possible to reliably decrease the ammonia concentration in the first chamber 23. The connection positions of the raw material supply line 4 and the outflow gas recycle line 11 connected to the housing part 55 may be reversed.

Further, the gas mixer 50 is not limited to the form in which the housing part 51 or 55 is formed by a portion of the outer wall of the reactor 2. A configuration may be adopted in which the housing part 51 or 55 of the gas mixer 50 and the reactor 2 are connected by a mixed gas line where a mixed gas of the ammonia gas and the diluent gas flows.

In Embodiment 1, the outflow gas recycle line 11 is connected to the reactor 2 so as to communicate with the first chamber 23, but may be connected to the raw material supply line 4. In the former configuration, part of the ammonia gas is blown onto the partition member 21 or the one end 26b of the containing tube 26a when the ammonia gas flows into the first chamber 23 from the raw material supply line 4, which may nitride the partition member 21 or the containing tube 26a. By contrast, in the latter configuration, since ammonia flows into the first chamber 23 in a state where ammonia is diluted in advance in the raw material supply line 4, the risk of nitridation can be reduced compared to the latter configuration.

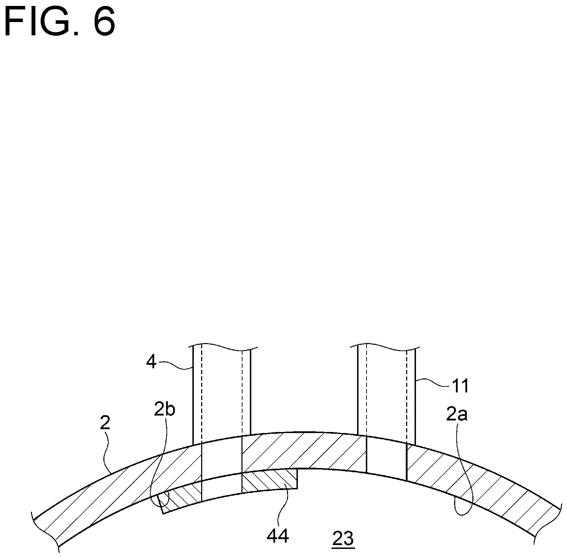

In Embodiment 1, the inner surface 2a of the reactor 2 may be covered with a refractory material such as a brick, a refractory brick, or refractory cement. However, in Embodiment 1, nitridation by ammonia may occur in the catalyst containing part 26, and thus covering the entire inner surface 2a of the reactor 2 with the refractory material results in an unnecessary cost increase from the viewpoint of the technical effect. However, as shown in FIG. 6, if the raw material supply line 4 and the outflow gas recycle line 11 are connected to the reactor 2 so as to communicate with the first chamber 23, a connection portion 2b, of the inner surface 2a of the reactor 2, of the reactor 2 with the raw material supply line 4 may be nitrided depending on an internal temperature of the first chamber 23 in the reactor 2. By contrast, if the inner surface 2a is partially covered with the refractory material 44 such that the connection portion 2b is surrounded, an increase in temperature of the connection portion 2b is suppressed by the refractory material 44, making it possible to reduce, without requiring undue cost, the risk of nitridation of the connection portion 2b.

In Embodiment 1, the diluent gas is the outflow gas (the crude cracked gas or the clean cracked gas) having flowed out from the reactor 2. However, the diluent gas is not limited to the outflow gas. A diluent gas different from the outflow gas may be prepared separately, and a diluent gas supply line may be provided through which a supply source of the diluent gas communicates with the reactor 2 or the raw material supply line 4. If the outflow gas is used as the diluent gas, the outflow gas recycle line 11 constitutes the diluent gas supply line.

Nitrogen gas and hydrogen gas can be used as the diluent gas other than the outflow gas, and hydrogen gas from a hydrogen pipeline may be used as the hydrogen gas. In addition, it is possible to use a gas which contains hydrogen produced in another hydrogen production process, such as (1) gas which contains hydrogen obtained by steam reforming methane or methanol, (2) coal gasification gas, (3) blast furnace gas, (4) coke oven gas, (5) gas obtained by increasing hydrogen through a water gas shift reaction with respect to the gases of the above (1) to (4), (6) gas obtained by removing carbon dioxide from the gas of the above (5), (7) gas obtained by removing moisture from the gas of the above (6), (8) gas which contains hydrogen obtained by catalytic reforming of naphtha, (9) gas which contains hydrogen obtained by electrolysis of water, or (10) gas which contains hydrogen obtained by a thermal decomposition reaction of methane. In further addition, it is possible to use gas which contains hydrogen obtained in an external ammonia decomposition process, such as gas which contains hydrogen obtained from an external plant for performing thermal decomposition on ammonia or gas which contains hydrogen obtained from an external plant for decomposing ammonia by an autothermal method.

In the ammonia decomposition reaction in Embodiment 1, since only hydrogen and nitrogen are produced, no carbon dioxide is emitted. Further, no carbon dioxide is emitted, unless fossil fuel is used as fuel when the heating medium such as steam or the combustion gas supplied to the third chamber 25 in Embodiment 1 is produced. As described above, as long as the outflow gas is used as the diluent gas without using fossil fuel in Embodiment 1, the raw material of the ammonia decomposition system 1 is completed with only ammonia and no carbon dioxide is emitted, and thus the ammonia decomposition system 1 is a preferred form as a carbon-free process.

The contents described in the above embodiments would be understood as follows, for instance.
[1] An ammonia decomposition system according to one aspect, includes: a reactor (2) filled with a catalyst (3) for a decomposition reaction where ammonia which is a raw material is decomposed into hydrogen and nitrogen; and a diluent gas supply line (11) for supplying a diluent gas having a lower ammonia concentration than the raw material, such that the diluent gas is mixed with the raw material before the raw material flows into the catalyst (3); and an ammonia combustor (14) for burning part of the ammonia.

With an ammonia decomposition system of the present disclosure, since an ammonia concentration in a reactor is decreased by a diluent gas, it is possible to suppress nitridation of a material constituting the reactor where ammonia is decomposed.

[2] An ammonia decomposition system according to another aspect is the ammonia decomposition system of [1], wherein the diluent gas is part of an outflow gas having flowed out from the reactor (2).

With such configuration, an operating cost of the ammonia decomposition system can be reduced compared to the case where the diluent gas is prepared separately.

[3] An ammonia decomposition system according to still another aspect is the ammonia decomposition system of [1] or [2], wherein the reactor (2) includes a catalyst containing part (26) for containing the catalyst (3), wherein the reactor (2) is internally divided into a first chamber (23), a second chamber (24) located downstream of the first chamber (23) in a flow direction of the raw material, and a third chamber (25) between the first chamber (23) and the second chamber (24), wherein the catalyst containing part (26) is disposed so as to communicate with each of the first chamber (23) and the second chamber (24) and to extend in the third chamber (25), and wherein the third chamber (25) is configured to allow a heating medium to flow therethrough.

With such configuration, since the ammonia concentration in the reactor is decreased by the diluent gas, it is possible to suppress nitridation of the material constituting the reactor where ammonia is decomposed.

[4] An ammonia decomposition system according to still another aspect is the ammonia decomposition system of [1] to [3], including a raw material supply line (4) for supplying the raw material to the reactor (2). The raw material supply line (4) is connected to a downstream end of the diluent gas supply line (11).

With such configuration, since an ammonia concentration can be decreased before the raw material flows into the reactor, it is possible to further suppress nitridation of a material constituting the reactor where ammonia is decomposed.

[5] An ammonia decomposition system according to still another aspect is the ammonia decomposition system of [3], wherein the diluent gas supply line (11) has a downstream end connected to the reactor (2).

In a case where the diluent gas is raised in temperature while flowing through the diluent gas supply line, if the diluent gas is supplied to the raw material supply line, the heat causes ammonia and the material of the raw material supply line to react, which may nitride the material of the raw material supply line. By contrast, with the above configuration [5], since ammonia and the diluent gas flow separately into the reactor, it is possible to reduce the risk of nitridation the material of the raw material supply line.

[6] An ammonia decomposition system according to still another aspect is the ammonia decomposition system of [5], including a raw material supply line (4) for supplying the raw material to the reactor (2). The reactor (2) has an inner surface (2a) at least partially covered with a refractory material (44) such that a connection portion (2b) of the reactor (2) with the raw material supply line (4) is surrounded.

With the above configuration [5], although it is possible to reduce the risk of nitridation of the material of the raw material supply line, the connection portion of the reactor with the raw material supply line may be nitrided depending on the internal temperature of the reactor. By contrast, with the above configuration [6], an increase in temperature of the above-described connection portion is suppressed by the refractory material, making it possible to reduce the risk of nitridation of the above-described connection portion.

[7] An ammonia decomposition system according to still another aspect is the ammonia decomposition system of any of [1] to [3], including a gas mixer communicating with the first chamber. The gas mixer is connected to each of the raw material supply line and the diluent gas supply line, and is configured to mix the raw material having flowed into the gas mixer via the raw material supply line and the diluent gas having flowed into the gas mixer via the diluent gas supply line.

With such configuration, since ammonia and the diluent gas are mixed before ammonia and the diluent gas flow into the first chamber, it is possible to reliably decrease the ammonia concentration in the reactor.

### Reference Signs List

- 1: Ammonia decomposition system
- 2: Reactor
- 2a: Inner surface (of reactor)
- 2b: Connection portion
- 3: Catalyst
- 4: Raw material supply line
- 6: Outflow gas line
- 11: Outflow gas recycle line (diluent gas supply line)
- 23: First chamber
- 24: Second chamber
- 25: Third chamber
- 26: Catalyst containing part
- 26a: Containing tube (catalyst containing part)
- 26c: Another end (communication portion) (of containing tube)
- 44: Refractory material
- 50: Gas mixer

## Claims

1. An ammonia decomposition system, comprising:
a reactor filled with a catalyst for a decomposition reaction where ammonia which is a raw material is decomposed into hydrogen and nitrogen; and
a diluent gas supply line for supplying a diluent gas having a lower ammonia concentration than the raw material, such that the diluent gas is mixed with the raw material before the raw material flows into the catalyst.

2. The ammonia decomposition system according to claim 1,
wherein the diluent gas is part of an outflow gas having flowed out from the reactor.

3. The ammonia decomposition system according to claim 1 or 2,
wherein the reactor includes a catalyst containing part for containing the catalyst,
wherein the reactor is internally divided into a first chamber, a second chamber located downstream of the first chamber in a flow direction of the raw material, and a third chamber between the first chamber and the second chamber,
wherein the catalyst containing part is disposed so as to communicate with each of the first chamber and the second chamber and to extend in the third chamber, and
wherein the third chamber is configured to allow a heating medium to flow therethrough.

4. The ammonia decomposition system according to claim 3, comprising:
a raw material supply line for supplying the raw material to the reactor,
wherein the raw material supply line is connected to a downstream end of the diluent gas supply line.

5. The ammonia decomposition system according to according to claim 3,
wherein the diluent gas supply line has a downstream end connected to the reactor.

6. The ammonia decomposition system according to claim 5, comprising:
a raw material supply line for supplying the raw material to the reactor,
wherein the reactor has an inner surface at least partially covered with a refractory material such that a connection portion of the reactor with the raw material supply line is surrounded.

7. The ammonia decomposition system according to any one of claims 1 to 3, comprising:
a gas mixer communicating with the reactor,
wherein the gas mixer is connected to each of the raw material supply line and the diluent gas supply line, and is configured to mix the raw material having flowed into the gas mixer via the raw material supply line and the diluent gas having flowed into the gas mixer via the diluent gas supply line.
